# EUROPÄISCHE PATENTSCHRIFT

(11) **EP 1 249 406 B1**
(45) Veröffentlichungstag und Bekanntmachung des Hinweises auf die Patenterteilung: **07.09.2005**
(21) Anmeldenummer: 02008418.2
(22) Anmeldetag: 12.04.2002
(51) Int. Cl.: B65G 21/06

(54) **Umlenkvorrichtung für ein Fördermittel**
Return device for a conveyor system
Dispositif de renvoi pour convoyeur

(30) Priorität: 14.04.2001 DE 10118567; 19.06.2001 DE 10129236
(43) Veröffentlichungstag der Anmeldung: 16.10.2002
(73) Patentinhaber: ROBERT BOSCH GMBH, 70469 Stuttgart (DE)
(72) Erfinder: Baier, Wolfram, 73760 Ostfildern (DE); Hettwer, Guido, 70469 Stuttgart (DE); Koban, Johannes, 70178 Stuttgart (DE); Klemd, Olaf, 71706 Marktgröningen (DE); Skljarow, Paul, 71701 Schwieberdingen (DE); Ludwig, Peter, 72072 Tübingen (DE); Lindemann, Uwe, 71088 Holzgerlingen (DE); Fischer, Joachim, 70376 Stuttgart (DE)
(74) Vertreter: Herzog, Markus

(56) Entgegenhaltungen:
- US-A- 4 875 573
- US-A- 5 875 883

## Beschreibung

Die Erfindung betrifft eine Umlenkvorrichtung (im Folgenden auch als "Umlenkstation" oder "Umlenkeinheit" bezeichnet) gemäß dem Oberbegriff von Anspruch 1. Als Fördermittel kommen dabei insbesondere flexible Fördermittel, beispielsweise Ketten, Kunststoffriemen und dergleichen in Betracht.

Eine Umlenkvorrichtung der genannten Art ist aus der US-A-4875573 bekannt. Die bekannte Umlenkvorrichtung weist zum Umlenken eines Fördermittels zwei Bauteile auf, welche um eine zur Umlenkebene im Wesentlichen orthogonale Schwenkachserelativ zueinander verschwenkbar und jeweils in einer vorbestimmten Winkelposition festgelegt sind, wobei eine Mehrzahl solcher Umlenkvorrichtungen jeweils durch Streckenabschnitte der Bewegungsbahn des Fördermittels miteinander verbunden sind. Die beiden Bauteile einer jeden der bekannten Umlenkvorrichtungen sind dabei jeweils an ihrem mit der Drehachse der Umlenkrolle zusammenfallenden Schwenkpunkt aneinander befestigt. Da bei dieser Vorrichtung nur ein einziger Befestigungspunkt zwischen den beiden Bauteilen im Zentrum der Umlenkrolle vorgesehen ist, ist die Stabilität der bekannten Umlenkvorrichtung beschränkt.

Aus der US-A-5875883 ist ferner ein über mehrere Umlenkrollen geführtes Förderband bekannt, welches an mehreren Punkten aus einer im Wesentlichen horizontalen Bewegungsbahn in eine geneigte Bewegungsbahn verschwenkbar ist, um einen Übergang zwischen zwei verschiedenen Transportniveaus zu ermöglichen. Um die Einstellung eines Winkels zwischen zwei benachbarten Förderbandabschnitten zu ermöglichen, sind diese an ihren Enden in verschiedenen Stellungen miteinander verschraubbar.

Weitere Fördereinrichtungen sind in den unterschiedlichsten Ausgestaltungen bekannt. Beispielsweise zeigt die DE 32 13 986 C2 einen Endlosförderer, welcher eine Vielzahl von Tragteilen aufweist, welche mittels einer endlosen Förderkette verbunden sind. Durch die allseitig bewegliche Förderkette ist es möglich, den Endlosförderer flexibel im Raum zu führen. Um dabei eine Richtungsänderung des Endlosförderers durchzuführen, werden Umlenkstationen eingesetzt, welche die Kette in einem vorbestimmten Winkel umlenken. Hierzu sind im Stand der Technik Umlenkstationen bekannt, welche die Kette mit festen Winkeln von 30°, 45°, 90° oder 180° umlenken. Durch Kombination mehrerer Umlenkstationen kann die Kette dabei um unterschiedliche Winkel umgelenkt werden. Hierbei ist jedoch beispielsweise für eine Umlenkung von 60° die Verwendung von zwei Umlenkstationen mit Winkeln von 30° notwendig, wodurch die Kosten für die Förderer erhöht werden, da für eine Umlenkung mehrere Umlenkstationen mit festen, vorgegebenen Winkeln notwendig sind. Weiterhin kann durch die Umlenkstation mit vorgegebenen Winkeln keine vollständige Flexibilität bei der Führung einer Kette für einen Förderer erreicht werden, da die Förderkette nicht um beliebige Winkel umlenkbar ist.

Derartige Umlenkeinheiten sind aus dem Katalog "Kettenfördersystem VarioFlow", Ausgabe 1.0, der Robert Bosch GmbH, Stuttgart, DE, Seiten 1-0 sowie 4-1 bis 4-3 bekannt. An der Umlenkeinheit sind zwei tangential angrenzende Streckenabschnitte befestigt. Der Winkel, den die beiden Streckenabschnitte einschließen, ist in mehreren Größen erhältlich. Hierzu besteht die Umlenkeinheit aus einem Oberteil und einem Unterteil, die schwenkbar aneinander gelagert sind. Da das Ober- und das Unterteil aneinander gelagert sind, müssen zusammenwirkende bzw. korrespondierende Lagerstellen ausgebildet sein, wodurch zwei unterschiedliche Gussformen notwendig sind. Ferner sind die beiden Teile relativ groß.

Demgegenüber ist es Aufgabe der vorliegenden Erfindung, eine Umlenkvorrichtung der eingangs genannten Art anzugeben, welche es ermöglicht, das Fördermittel um einen beliebigen Winkel umzulenken, und welche eine stabilere Festlegung der Komponenten der Umlenkvorrichtung während des Betriebs erlaubt.

Erfindungsgemäß wird diese Aufgabe durch eine Umlenkvorrichtung der eingangs genannten Art gelöst, bei welcher wenigstens ein Bauteil oder/und die Basisplatte entweder ein kreisbogensegmentförmiges Langloch oder eine Mehrzahl von auf einem Kreisbogen angeordneten Bohrungen aufweist, welches bzw. welche im Abstand von der Schwenkachse angeordnet ist bzw. sind. Die erfindungsgemäße Umlenkvorrichtung hat den Vorteil, dass sie ein Fördermittel in einem beliebigen Winkel umlenken kann, wodurch im Vergleich zum Stand der Technik die Anzahl von Teilen und Baugruppen reduziert werden kann, welche zur Bereitstellung von Umlenkvorrichtungen mit unterschiedlichem Umlenkwinkel notwendig sind. Durch die Bereitstellung eines Befestigungspunktes im Abstand von der Schwenkachse wird ferner eine stabilere Verbindung zwischen den beiden Bauteilen bzw. zwischen der Basisplatte und den Bauteilen ermöglicht. Weiter können insbesondere die Fertigung- bzw. Werkzeugkosten gesenkt werden, da die erfindungsgemäße Umlenkvorrichtung an allen Umlenkstellen in der Förderstrecke eingesetzt werden kann. Hinzu kommt, dass die erfindungsgemäße Umlenkvorrichtung in der Herstellung günstig und leicht montierbar ist.

Gemäß der Erfindung können die beiden Bauteile derart ausgebildet sein, dass sie aneinander befestigt werden können. Dies trägt zur weiteren Reduzierung der zur Bereitstellung der erfindungsgemäßen Umlenkvorrichtung erforderlichen Teile bei. Auf die Herstellungs- und Lagerhaltungskosten wirkt es sich ferner vorteilhaft aus, wenn die beiden Bauteile identisch ausgebildet sind, beispielsweise als Gussteile. Dabei kann zur Erleichterung der Positionierung der beiden Bauteile relativ zueinander ein Zentrierring vorgesehen sein, der im betriebsbereiten Zustand der Umlenkvorrichtung die Schwenkachse umgebend zwischen den beiden Bauteilen angeordnet ist. Es ist jedoch ebenso möglich, dass eines der beiden Bauteile einen ringförmigen Flansch aufweist, der zur Positionierung des jeweils anderen Bauteils dient.

Zur Befestigung der beiden Bauteile aneinander können die beiden Bauteile jeweils in einem der Schwenkachse zugeordneten Bereich wenigstens eine Bohrung aufweisen. Durch jeweils eine Bohrung jedes Bauteils kann dann ein zur Schwenkachse koaxial verlaufender Verbindungsstift, beispielsweise Schraubbolzen, gesteckt werden. Weist jedes der Bauteile eine Mehrzahl derartiger Bohrungen auf, so können diese Bauteile zur Bereitstellung von Umlenkvorrichtungen unterschiedlicher Umlenkradien eingesetzt werden, was sich wiederum vorteilhaft auf die Herstellung- und die Lagerhaltungskosten auswirkt.

In Abhängigkeit davon, ob die Anlageflächen der beiden Bauteile zum formschlüssigen (beispielsweise mittels einer Stirnverzahnung) oder reibschlüssigen Eingriff miteinander ausgebildet sind, kann der Umlenkwinkel in vorbestimmten Winkelschritten oder stufenlos variiert werden.

Alternativ hierzu können die beiden Bauteile jeweils eine Mehrzahl von Bohrungen aufweisen, welche in gleichen Abständen voneinander angeordnet sind, und zwar vorzugsweise auf einem Umfangskreis um die Schwenkachse. Auch diese Ausführungsform erlaubt eine Variation des Umlenkwinkels in einem vorbestimmten Winkelraster. Weist hingegen wenigstens eines der beiden Bauteile wenigstens ein Langloch auf, das wenigstens einer Bohrung oder/und einem Langloch des jeweils anderen Bauteils gegenüberliegt, so kann der Umlenkwinkel stufenlos variiert werden. Dabei folgt die Erstreckungsrichtung der Langlöcher wiederum einem Umfangskreis um die Schwenkachse. Ein besonders großer Variationsbereich verschiedener Umlenkwinkel kann beispielsweise dadurch erzielt werden, dass die beiden Bauteile jeweils zwei einander bezüglich der Schwenkachse diametral gegenüberliegende Langlöcher aufweisen.

Gemäß der Erfindung können die beiden Bauteile alternativ auch an einer gemeinsamen Basisplatte befestigbar sein. Diese Weiterbildungsvariante hat besondere Vorteile hinsichtlich der Montage der Umlenkvorrichtung, da die Basisplatte mit den weiteren Funktionsteilen der Umlenkvorrichtung zusammengefügt werden kann, bevor anschließend die beiden Bauteile mit oder ohne den daran angrenzenden Streckenabschnitten an der Basisplatte in der gewünschten Winkelposition befestigt werden können.

Wenn die Basisplatte zwei, vorzugsweise einander bezüglich der Schwenkachse diametral gegenüberliegende, Langlöcher aufweist, deren Längserstreckung vorzugsweise wiederum einem Umfangskreis um die Schwenkachse folgt, so kann hierdurch wiederum der Umlenkwinkel stufenlos variiert werden.

Wie vorstehend bereits angedeutet wurde, werden bei sämtlichen Weiterbildungsvarianten die beiden Bauteile vorzugsweise mittels wenigstens eines Verbindungsstifts, vorzugsweise mittels wenigstens eines Schraubbolzens, in der vorbestimmten Winkelposition festgelegt.

Zur Verbindung der beiden Bauteile mit den ihnen zugeordneten Streckenabschnitten kann gemäß einer ersten Alternative an den beiden Bauteilen jeweils ein Verbindungselement einstückig angeformt sein, welches an einem der Streckenabschnitte befestigbar ist. Es ist gemäß einer zweiten Alternative jedoch ebenso möglich, dass wenigstens ein gesondertes Verbindungselement vorgesehen ist, das einenends an einem der Bauteile und andernends an einem Streckenabschnitt befestigbar ist. Bei beiden Alternativen kann das Verbindungselement in einfacher und zuverlässiger Weise an dem Streckenabschnitt befestigt werden, wenn das Verbindungselement in einer Aufnahmenut des Streckenabschnitts anordenbar und in dieser an dem Streckenabschnitt befestigbar ist.

Zur Minderung der Gleitreibung beim Umlenken des Fördermittels wird vorgeschlagen, dass die Umlenkvorrichtung ein Umlenkrad für das Fördermittel umfasst, wobei das Umlenkrad mittels eines Lagers an einer die beiden Bauteile umfassenden Aufnahme um die Schwenkachse drehbar gelagert ist. An diesem Umlenkrad kann zudem mittelbar oder unmittelbar eine Antriebseinheit angreifen, welche dazu dient, das Umlenkrad in eine Drehbewegung um die Schwenkachse zu versetzen. Hierdurch kann die erfindungsgemäße Umlenkvorrichtung zusätzlich die Funktion einer Antriebsvorrichtung für das Fördermittel übernehmen. Hierzu wird ferner vorgeschlagen, dass zwischen der Antriebseinheit und dem Umlenkrad eine Kupplung angeordnet ist.

Wenn das Umlenkrad plattenförmig ausgebildet und über ein Verbindungselement mit dem Drehlager verbunden ist, so ermöglicht dies eine einfache Montage des Umlenkrads, da das Verbindungselement mit dem Lager vormontiert sein kann. Grundsätzlich ist es jedoch ebenso denkbar, dass am Umlenkrad ein mit diesem einstückig ausgebildeter Flansch vorgesehen ist, über welchen das Umlenkrad mit dem Drehlager verbunden ist.

Schließlich kann die erfindungsgemäße Umlenkvorrichtung zwei Umlenkräder umfassen, die das Fördermittel in einem Obertrum in der Transportebene und in einem Untertrum parallel zur Transportebene umlenken.

Gemäß Vorstehendem hat die erfindungsgemäße Umlenkstation für einen Stetigförderer den Vorteil, dass sie ein Zugmittel in einem beliebigen Winkel umlenken kann. Somit ermöglicht die erfindungsgemäße Umlenkstation eine völlig flexible Winkeleinstellung zur Umlenkung des Zugmittels. Dadurch kann insbesondere die Anzahl von Teilen und Baugruppen reduziert werden, welche im Stand der Technik für die Umlenkstationen mit unterschiedlichen Umlenkwinkeln notwendig sind. Weiter können insbesondere die Fertigungs- bzw. Werkzeugkosten gesenkt werden, da die erfindungsgemäße Umlenkstation an allen Umlenkstellen in der Förderstrecke eingesetzt werden kann. Hierzu ist erfindungsgemäß eine Aufnahme, an welcher ein Lager für ein Umlenkrad angeordnet ist, geteilt ausgebildet. D.h. die Aufnahme besteht aus einem oberen Bauteil und einem unteren Bauteil, welche lösbar miteinander verbunden sind. Im gelösten Zustand sind die Bauteile zueinander verschwenkbar, so dass ein beliebiger Umlenkwinkel des Zugmittels durch die Verschwenkung der beiden Bauteile relativ zueinander eingestellt werden kann. Somit wird erfindungsgemäß eine beliebige Winkeleinstellung an der Umlenkstation möglich, wobei die Umlenkstation sowohl für horizontale Umlenkungen als auch für vertikale Umlenkungen eingesetzt werden kann.

Vorzugsweise sind das obere Bauteil und das untere Bauteil der Aufnahme mittels Schrauben miteinander verbunden. Dadurch kann sichergestellt werden, dass die beiden Bauteile einfach für eine Verstellung ihrer Relativposition zu einander gelöst und anschließend wieder miteinander befestigt werden können.

Um eine definierte Positionierung des oberen und des unteren Bauteils der Aufnahme zu einander zu ermöglichen und eine einfache Verschwenkung der beiden Bauteile zu einander zu ermöglichen, weist entweder das obere oder das untere Bauteil einen ringförmigen Flansch auf. An diesem Flansch kann dann das andere Bauteil einfach verschwenkt werden.

Vorzugsweise weisen das obere und das untere Bauteil jeweils eine Vielzahl von Bohrungen auf, welche in gleichen Abständen voneinander beabstandet sind. Dadurch kann eine Einstellung des Winkels in einem Raster ermöglicht werden, wobei der jeweilige Unterschied zwischen benachbarten Winkeln vom Abstand der Bohrungen zueinander abhängt. Beispielsweise können die Bohrungsabstände so gewählt werden, dass dadurch Verstellschritte der geteilten Aufnahme im Bereich von 1°, 2° oder 5° vorgegeben werden.

Um eine vollständig flexible Einstellung des Winkels an der Umlenkstation zu ermöglichen, weisen das obere und das untere Bauteil der Aufnahme zwei diametral gegenüber liegende Langlöcher auf. Die beiden Bauteile sind dann mittels durch die Langlöcher geführten Schrauben verbindbar. Dadurch kann der Winkel der Umlenkung auf einen beliebigen Winkelwert eingestellt werden.

Vorzugsweise werden die Streckenprofile des Stetigförderers unmittelbar an der Umlenkstation befestigt. Hierbei ist vorzugsweise ein zur Umlenkstation hinführendes Streckenprofil entweder am oberen oder am unteren Bauteil angeordnet und ein von der Umlenkstation wegführendes Streckenprofil ist an dem anderen Bauteil angeordnet. D.h., wenn z.B. das zur Umlenkstation hinführende Streckenprofil mit dem oberen Bauteil der Aufnahme verbunden ist, ist das von der Umlenkstation wegführende Streckenprofil mit dem unteren Bauteil der Aufnahme verbunden.

Gemäß einer bevorzugten Ausgestaltung der vorliegenden Erfindung ist an der Umlenkstation eine Antriebseinheit befestigt, um das Umlenkrad anzutreiben. Dadurch kann die erfindungsgemäße Umlenkstation nicht nur zum Umlenken einer Förderkette eingesetzt werden, sondern gleichzeitig auch für ihren Antrieb verwendet werden. Die Antriebseinheit kann beispielsweise als angeflanschter Getriebemotor ausgebildet sein. Dadurch kann auf eine separate Antriebseinheit für den Stetigförderer verzichtet werden.

Vorzugsweise ist eine Kupplung zwischen der Antriebseinheit und dem Umlenkrad angeordnet.

Um eine einfache Verbindung des Umlenkrades mit dem Lager zu ermöglichen, ist das Umlenkrad plattenförmig ausgebildet und weist an seinem Außenumfang eine Vielzahl von Zähnen für einen Eingriff mit einer als Zugmittel verwendeten Kette auf. Über ein Verbindungselement ist das plattenförmige Umlenkrad dabei mit dem Lager verbunden. Somit können das plattenförmige Umlenkrad und das Verbindungselement aus unterschiedlichen Materialien hergestellt werden.

Gemäß einer anderen bevorzugten Ausgestaltung der vorliegenden Erfindung ist am Umlenkrad ein Flansch einstückig ausgebildet, über welchen das Umlenkrad mit dem Lager verbunden ist. Dadurch kann die Teilezahl an der Umlenkstation verringert werden.

Besonders bevorzugt ist der erfindungsgemäße Stetigförderer als Kettenförderer ausgebildet, welcher als Zugmittel eine Kette verwendet.

Ferner hat die erfindungsgemäße Umlenkeinheit den Vorteil, dass sie günstig in der in der Herstellung und leicht montierbar ist, indem die Umlenkeinheit eine Platte umfasst, an der wenigstens ein Flügel, an dem einer der Streckenabschnitte befestigbar ist, schwenkbar angeordnet ist.

Besonders günstig ist es, einen Flügel über mindestens zwei stiftförmige Elemente an der Platte zu befestigen.

Es ist vorteilhaft, wenn an dem Flügel ein Verbinder befestigt ist, der in einer Längsnut des Streckenabschnitts verankert ist.

Vorzugsweise ist die Vorrichtung im Wesentlichen spiegelsymmetrisch ausgebildet und weist zwei Flügel auf.

Sind die Flügel in zwei sich diametral gegenüberliegenden Langlöchern der Platte geführt, können die Winkel, den die Streckenabschnitte einschließen, stufenlos eingestellt werden.

Umfasst die Umlenkeinheit wenigstens ein Umlenkrad für das Fördermittel, das in der Platte gelagert ist, so kann das Fördermittel ohne Gleitreibung umgelenkt werden.

In einer bevorzugten Weiterbildung umfasst die Umlenkeinheit einen Antrieb für das Umlenkrad, der an die Platte angeflanscht ist.

In einer vorteilhaften Weiterbildung der Erfindung sind an der Umlenkeinheit zwei Umlenkräder angeordnet, die das Fördermittel in einem Obertrum in der Transportebene und einem Untertrum parallel zur Transportebene umlenken.

Weitere Vorteile und vorteilhafte Weiterbildungen der erfindungsgemäßen Umlenkeinheit ergeben sich aus den abhängigen Ansprüchen und der Beschreibung.

Die Erfindung wird im Folgenden an Ausführungsbeispielen anhand der beigefügten Zeichnungen näher erläutert werden. Es stellt dar:
Figuren 1 bis 5 Darstellungen zur Erläuterung einer ersten alternativen Ausführungsvariante einer erfindungsgemäßen Umlenkvorrichtung. Insbesondere zeigt
   - Fig. 1: eine schematische Schnittansicht einer Umlenkstation gemäß einem ersten Ausführungsbeispiel der Erfindung,
   - Fig. 2: eine perspektivische Ansicht von oben der in Fig. 1 dargestellten Umlenkstation,
   - Fig. 3: eine perspektivische Ansicht von unten der in Fig. 1 dargestellten Umlenkstation,
   - Fig. 4: eine perspektivische Gesamtansicht der Umlenkstation, und
   - Fig. 5: eine schematische, perspektivische Explosionsdarstellung der erfindungsgemäßen Umlenkstation;
Fig. 6 eine Darstellung zur Erläuterung eines Beispiels einer nicht gemäß der Erfindung ausgebildeten Umlenkvorrichtung, nämlich

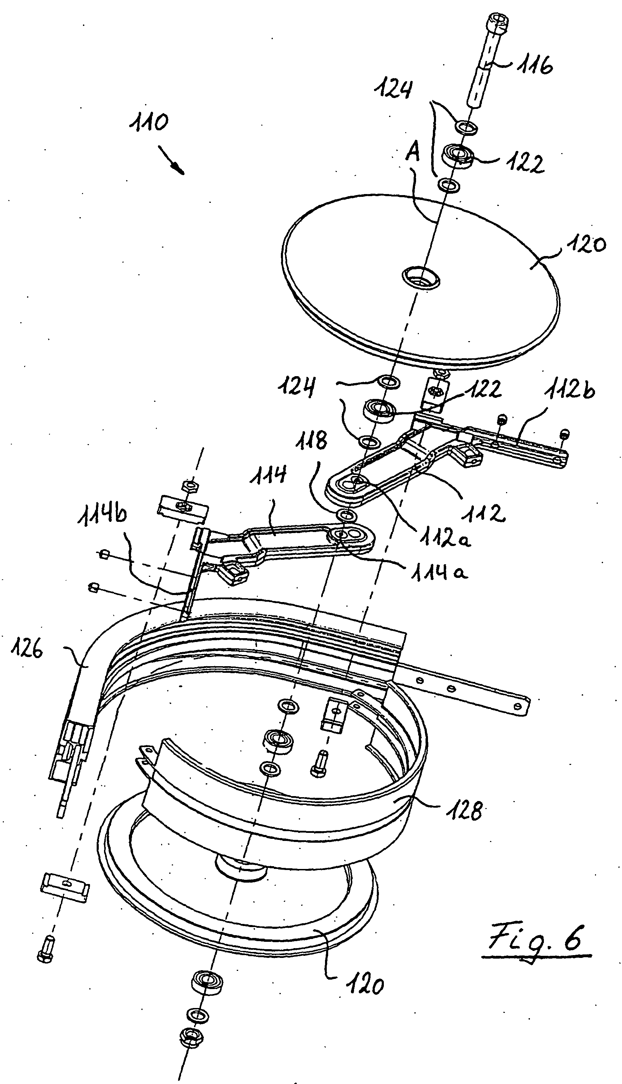

   - Fig. 6: eine Explosionsdarstellung dieser Umlenkvorrichtung; und

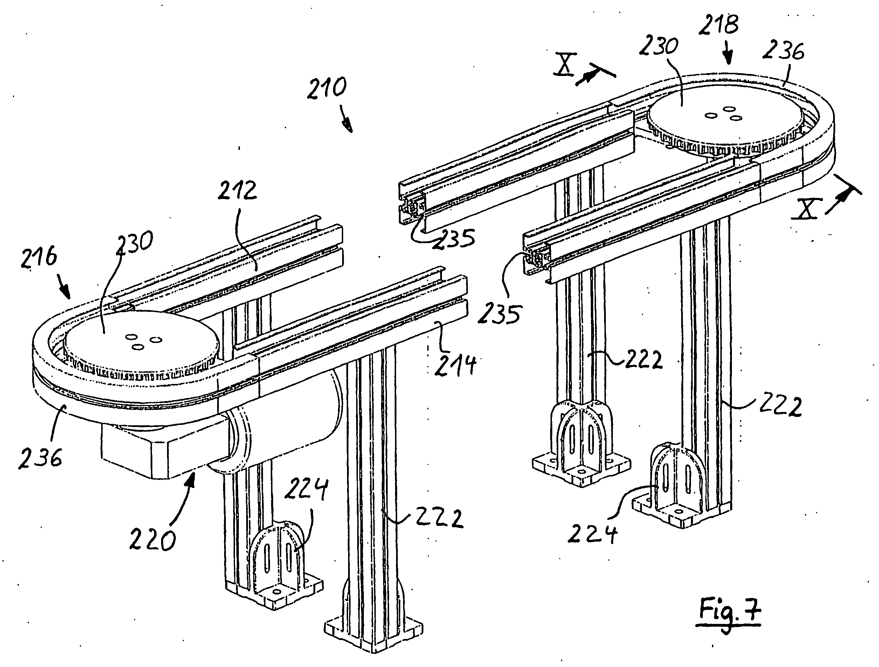

Fig. 7 bis 10 Darstellungen zur Erläuterung einer zweiten alternativen Ausführungsvariante. Insbesondere zeigt
   - Fig. 7: eine perspektivische Ansicht eines Fördersystems von oben,

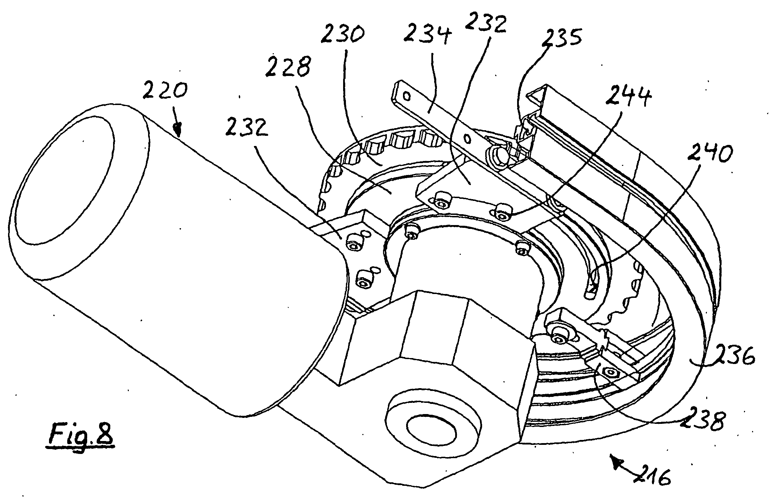

   - Fig. 8: eine perspektivische Ansicht einer Umlenkeinheit von unten,

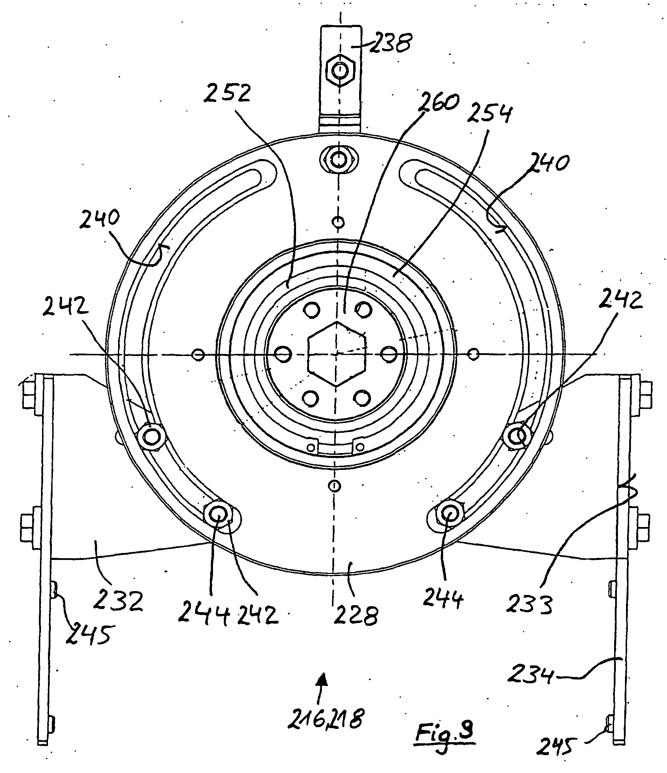

   - Fig. 9: eine Draufsicht auf die Umlenkeinheit nach Fig. 8, und

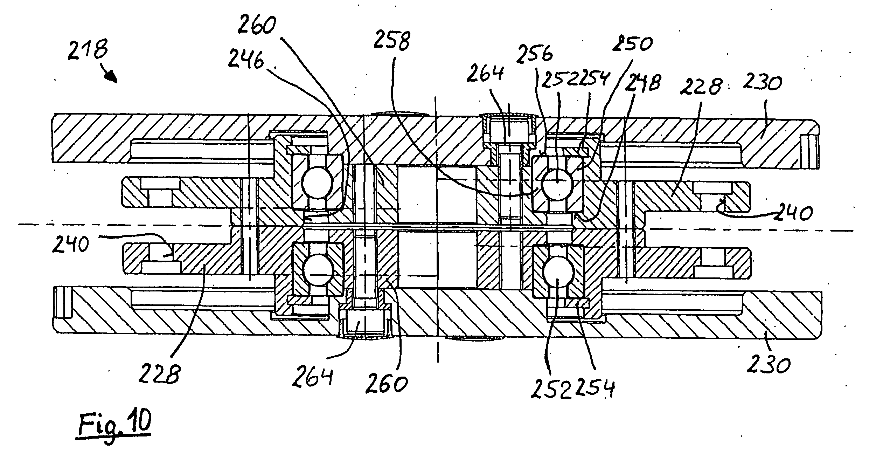

   - Fig. 10: einen Schnitt durch die Umlenkeinheit gemäß den Schnittlinien X-X in Fig. 7.

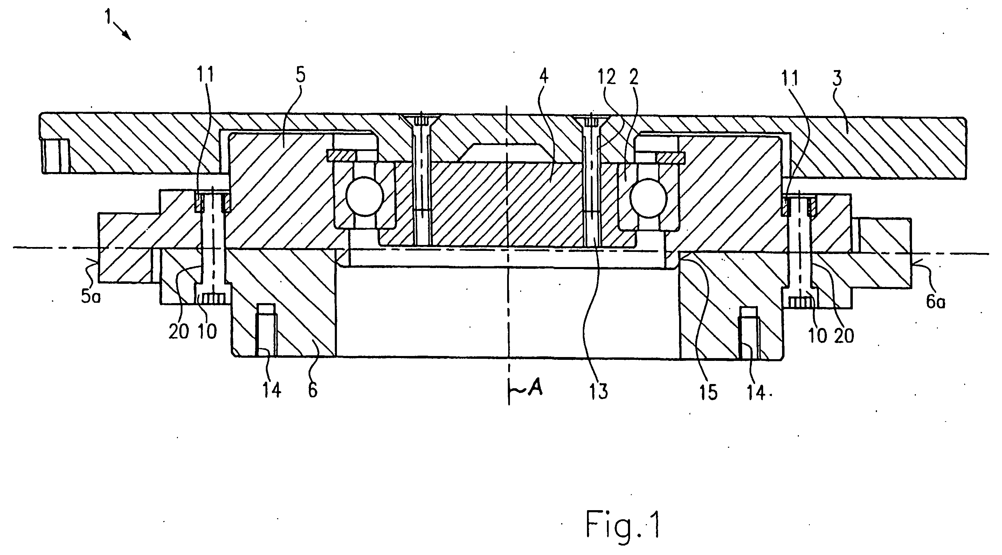

In den Figuren 1 bis 5 ist eine Umlenkstation gemäß einem ersten Ausführungsbeispiel der vorliegenden Erfindung dargestellt.

Wie insbesondere in den Figuren 1, 2 und 5 gezeigt, umfasst die erfindungsgemäße Umlenkstation 1 ein ringförmiges Umlenkrad 3, welches eine Vielzahl von Zähnen an seinem äußeren Außenumfang aufweist. Wie in Figur 1 gezeigt, ist das Umlenkrad 3 über ein Verbindungselement 4 drehbar um eine Mittelachse A an einem Lager 2 befestigt. Das Verbindungselement 4 ist mit dem Umlenkrad 3 über Schrauben 12 verbunden. Weiter umfasst die Umlenkstation 1 eine ortsfeste Aufnahme, welche zweiteilig ausgebildet ist. Genauer umfasst die Aufnahme ein oberes Bauteil 5 und ein unteres Bauteil 6. Die beiden Bauteile 5, 6 sind mittels Schrauben 10 und Muttern 11 lösbar miteinander verbunden.

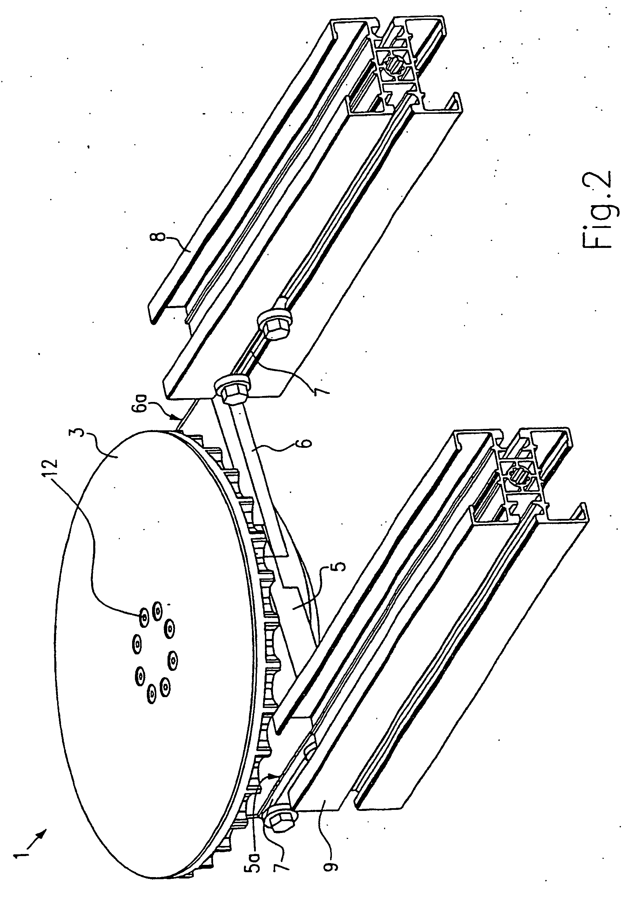

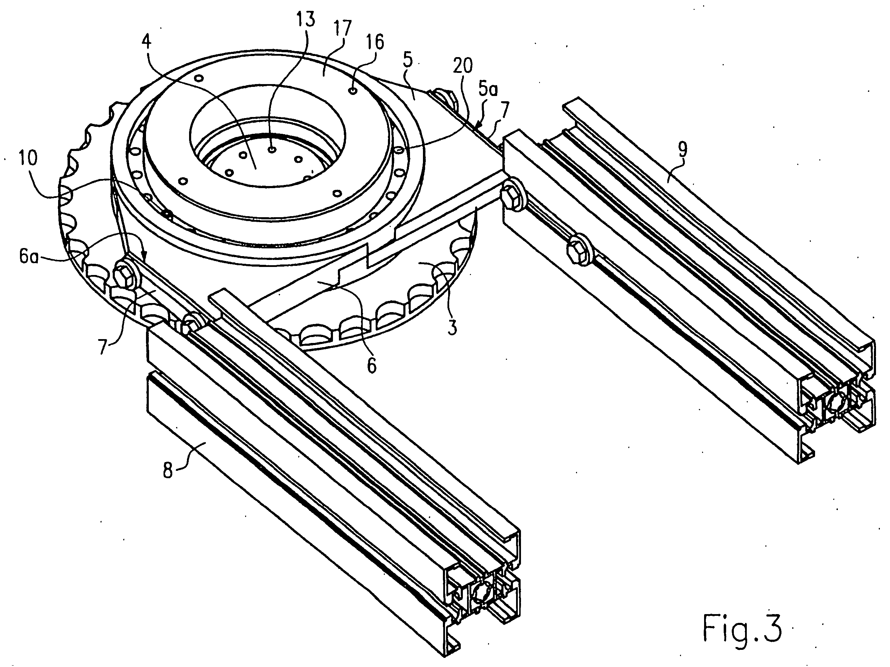

Wie weiterhin in Figur 1 gezeigt, ist am oberen Bauteil 5 ein ringförmiger Flansch 15 ausgebildet, welcher mit einer inneren Umfangsöffnung des unteren Bauteils 6 in Kontakt steht. Wie insbesondere aus Figur 1 ersichtlich ist, sind das obere und das untere Bauteil 5 und 6 asymmetrisch gebildet und das obere Bauteil 5 weist eine Außenseite 5a auf, und das untere Bauteil 6 weist eine Au8enseite 6a auf. Wie insbesondere in den Figuren 2 und 3 ersichtlich ist, sind an den Außenseiten 5a und 6a Profile 8 bzw. 9 mittels eines Profilverbinders 7 verbunden. Genauer ist an der Außenseite 5a des oberen Bauteils ein Profil 9 angeordnet, welches die Kette (nicht dargestellt) von der Umlenkstation wegführt. An der Außenseite 6a des unteren Bauteils 6 ist ein Profil 8 befestigt, welches die Kette der Umlenkstation 1 zuführt. Wie in den Figuren 2 und 3 gezeigt, ist die Umlenkstation derart eingestellt, dass sie die Kette in einem Winkel von 180° umlenkt.

Wie insbesondere in Figur 3 gezeigt, ist am unteren Bauteil 6 ein Zwischenflansch 17 befestigt, welcher mittels Befestigungsmitteln in Gewinden 14 im unteren Bauteil 6 befestigt werden kann. Am Zwischenflansch 17 sind Gewinde 16 (vgl. Figur 3) vorgesehen, um einen nicht dargestellten Getriebemotor zu befestigen. Weiterhin sind, wie in Figur 1 gezeigt, am Verbindungselement 4 Bohrungen 13 vorgesehen, welche zur Befestigung einer nicht dargestellten Kupplung zur Drehmomentübertragung dienen.

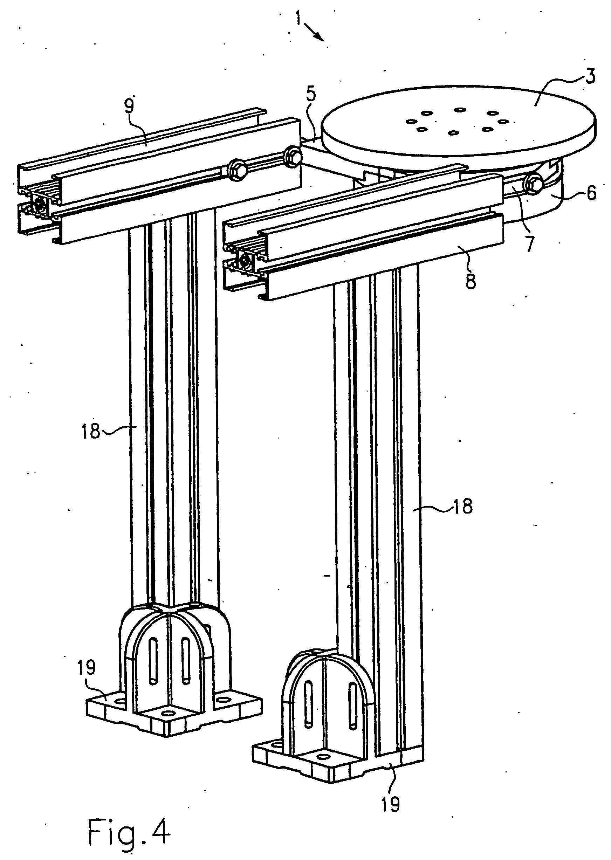

Wie in Figur 4 gezeigt, sind weiterhin Stützen 18 vorgesehen, welche an den Profilen 8 bzw. 9 befestigt sind und an ihrem unteren Ende jeweils einen Fuß 19 aufweisen.

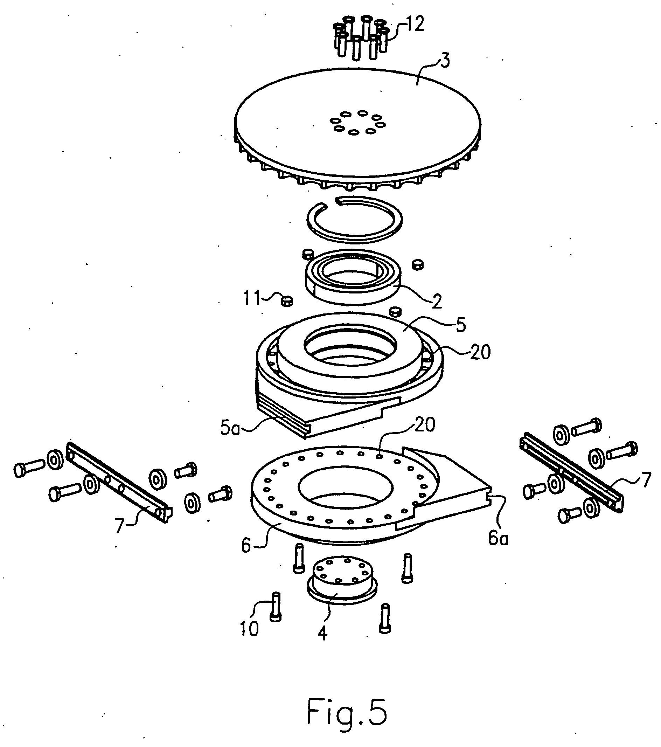

Aus der Explosionsdarstellung in Figur 5 ist ersichtlich, dass das obere Bauteil 5 und das untere Bauteil 6 identisch ausgebildet sind, wobei die Bauteile umgekehrt zueinander befestigt werden. Dabei können die Bauteile 5 und 6 zueinander um die Achse A verschwenkt werden.

Nachfolgend wird die Verstellmöglichkeit der erfindungsgemäßen Umlenkstation 1 erläutert. Wenn die in den Figur 1 gezeigten Schrauben 10 gelöst werden, kann das untere Bauteil 6 relativ zum oberen Bauteil 5 um den ringförmigen Flansch 15 verschwenkt werden. Da die Profile 8 bzw. 9 jeweils an den Außenseiten 5a des oberen Bauteils bzw. 6a des unteren Bauteils befestigt sind, erfolgt durch diese Verschwenkung der beiden Bauteile 5 und 6 zu einander eine Änderung des Umlenkwinkels an der Umlenkstation.

Nachdem die Bauteile 5 und 6 relativ zu einander verdreht wurden, wird ihre Position wieder mittels der Schrauben 10 zu einander fixiert. Wie insbesondere aus Figur 3 und 5 ersichtlich ist, sind hierbei eine Vielzahl von Bohrungen 20 im oberen und unteren Bauteil 5 und 6 vorgesehen. Abhängig vom Abstand der Bohrungen 20 zu einander können dabei unterschiedliche Winkel eingestellt werden.

Um eine vollständig flexible Einstellung des Umlenkwinkels an der Umlenkstation zu ermöglichen, können jeweils Langlöcher in dem oberen bzw. unteren Bauteil 5 und 6 vorgesehen werden. In die Langlöcher sind jeweils Schrauben eingeführt, welche ein Verbinden des oberen mit dem unteren Bauteil 5, 6 der Aufnahme in beliebigen Positionen zueinander ermöglichen. Somit ist es erfindungsgemäß möglich, den Winkel an der Umlenkstation beliebig einzustellen. Damit können die im Stand der Technik vorhandenen Nachteile der bekannten Umlenkstation mit fest vorgegebenen Winkeln beseitigt werden. Durch die in obere Bauteil 5 und das untere Bauteil 6 geteilte Aufnahme mit der Lagerung des Umlenkrades 3 am oberen Bauteil 5 wird somit auf einfache Weise eine flexible Einstellung eines Winkels an der Umlenkstation erreicht.

Somit kann eine allseitig bewegliche Förderkette flexibel in einem Raum geführt werden und an unterschiedlichste Layouts eines Endlosförderers angepasst werden. Hierbei ist insbesondere bemerkenswert, dass beispielsweise bei einer Änderung Förderstrecke die Umlenkstation auf einfachste Weise an die geänderte Förderstrecke, d.h. einen anderen Umlenkwinkel, angepasst werden kann. Somit können die erfindungsgemäßen Umlenkstationen wiederholt in Fördersystemen mit geändertem Layout eingesetzt werden.

Demnach betrifft die vorliegende Erfindung eine Umlenkstation 1 für einen Stetigförderer, insbesondere einen Kettenförderer umfassend ein Umlenkrad 3, welches drehbar an einem Lager 2 gelagert ist und ein Zugmittel, insbesondere eine Kette, in einem vorbestimmten Winkel umlenkt. Weiter ist eine ortsfeste Aufnahme vorgesehen, an welcher das Lager 2 angeordnet ist. Dabei ist die Aufnahme geteilt ausgebildet und weist ein oberes Bauteil 5 und ein unteres Bauteil 6 auf. Die beiden Bauteile 5, 6 sind lösbar miteinander verbunden, wobei die Bauteile 5, 6 zu einander verschwenkt werden können, um einen Umlenkwinkel des Zugmittels des Stetigförderers beliebig einzustellen.

In Figur 6 ist ein Beispiel einer nicht erfindungsgemäßen Umlenkvorrichtung dargestellt. Die Umlenkvorrichtung 110 umfasst zwei identisch ausgebildete, vorzugsweise als Gussteile gefertigte Bauteile 112 und 114, die mittels eines einzigen, im Wesentlichen koaxial zur Schwenkachse A verlaufenden Schraubbolzens 116 aneinander befestigt werden können. Die Bauteile 112 und 114 verfügen hierzu im Bereich ihres einen freien Endes über eine Durchbrechung 112a bzw. 115a, die vom Schraubbolzen 116 durchsetzt wird. Genauer gesagt verfügen die Bauteile 112 und 114 jeweils über eine Mehrzahl derartiger Durchbrechungen 112a und 114a. Dies ermöglicht den Einsatz des Gussteils zur Bereitstellung von Umlenkvorrichtungen mit unterschiedlichem Umlenkradius. Zwischen den beiden Bauteilen 112 und 114 ist ein Abstandshalter- und Zentrierring 118 vorgesehen. Auf diese Weise können die Bauteile 112 und 114 mittels des Schraubbolzens 116 in jeder beliebigen Winkelposition bezüglich der Schwenkachse A festgelegt werden.

Beim Festziehen des Schraubbolzens 116 werden an den Bauteilen 112 und 114 gleichzeitig auch noch zwei Umlenkräder 120 montiert, von denen das eine einem Obertrum und das andere einem Untertrum des Fördermittels zugeordnet sind. Mittels Lagerelementen 122 und Beilagscheiben 124 sind die Umlenkräder 120 an den beiden Bauteilen 112 und 114 drehbar gelagert.

An ihren bezüglich der Schwenkachse A radial äußeren Enden ist an den Bauteilen 112 und 114 jeweils ein Verbindungselement 112b, 114b angeformt, welche der Verbindung mit einem Streckenabschnitt der Förderstrecke des Fördermittels dienen.

Die Umlenkvorrichtung 110 wird von zwei Abdeckelementen 126 und 128 komplettiert, welche den von den beiden Umlenkrädern 120 eingeschlossenen Innenraum der Umlenkvorrichtung 110 vor dem Eintritt von Fremdstoffen schützen.

Bezüglich weiterer Ausgestaltungsmöglichkeiten der Umlenkvorrichtung 110 und der damit erzielbaren Vorteile sei auf die Beschreibung der Ausführungsform gemäß Figuren 1 bis 5 sowie der Ausführungsform gemäß Figuren 7 bis 10 verwiesen.

In den Figuren 7 bis 10 ist eine Umlenkstation gemäß einem zweiten Ausführungsbeispiel der vorliegenden Erfindung dargestellt.

In Figur 7 ist ein Fördersystem 210 dargestellt. Bei dem Fördersystem 210 wird als Fördermittel eine nicht dargestellte, raumgängige Förderkette verwendet. Das Fördermittel wird bei dem in der Figur 1 gezeigten Ausführungsbeispiel nur in der Ebene seiner Transportrichtung umgelenkt. Deshalb wären auch andere Fördermittel beispielsweise Rundriemen oder kurvengängige Plattenketten verwendbar.

Das Fördersystem 210 umfasst zwei gerade, gleich lange und parallel zueinander verlaufende, unterbrochen dargestellte Streckenabschnitte 212, 214. Die Streckenabschnitte 212, 214 grenzen tangential an Umlenkeinheiten 216, 218, an denen die Streckenabschnitte 212, 214 stirnseitig befestigt sind. Dadurch wird mit Hilfe des Fördermittels ein endlos umlaufendes Fördersystem 210 gebildet. Die Umlenkeinheit 216 umfasst einen Antrieb 220, der von unten an die Umlenkeinheit 216 angeflanscht ist. Das Fördersystem 210 steht auf vier Säulen 222, von denen jeweils zwei an einem Streckenabschnitt 212, 214 befestigt sind und die über Sockel 224 an einem Boden verankert sind.

Wie leicht ersichtlich ist, kann das Fördersystem 210 auch einen anderen Grundriss oder Verlauf bzw. ein anderes "Layout" als in der Figur 7 haben. Es können mehr Umlenkeinheiten 216, 218 vorgesehen werden, das Fördermittel kann in mehrere Transportebenen umgelenkt werden, die Streckenabschnitte 212, 214 können gekrümmt sein usw. Das Fördersystem 210 kann dadurch leicht an die jeweiligen Anforderungen angepasst werden.

Wie aus der Figur 8 hervorgeht, umfasst die Umlenkeinheit 216, 218 eine runde Platte 228. An der Seite der Platte 228, die einem gegebenenfalls vorgesehenen Antrieb 220 gegenüberliegt, ist ein Umlenkrad 230 gelagert. Statt des sich drehenden Umlenkrads 230, an dem das Transportmittel umläuft, kann auch eine Einrichtung vorgesehen sein, an der das Transportmittel entlang gleitet, beispielsweise eine Schiene.

An der Platte 228 sind außerdem zwei im wesentlichen dreieckige Flügel 232 bzw. Adapterplatten oder Klemmplatten an der eines vorgesehenen Umlenkrads 230 gegenüberliegenden Seite schwenkbar gelagert. An einer Außenseite 233 der Flügel 232 sind aber angeschraubte stahlförmige Verbinder 234 die Streckenabschnitte 212, 214 und die Umlenkeinheit 216, 218 befestigt. Die Verbinder 234 sind jeweils in einer Längsnut 235 (Figur 7) der Streckenabschnitte 212, 214 verankert. Ferner ist an den Flügeln 232 im vorliegenden Ausführungsbeispiel ein Kurvenstück 236, das die äußere Führung für das Transportmittel an der Umlenkeinheit 216, 218 darstellt, befestigt. Das Kurvenstück 236 ist schließlich über einen mehrteiligen Klemmverbinder 238 mit der Platte 228 verspannt.

Aus der Draufsicht der Figur 9 (ohne Umlenkrad 230) ist ersichtlich, dass die Umlenkeinheit 216, 218 im Wesentlichen spiegelsymmetrisch ausgebildet ist. Die beiden Flügel 232 sind in zwei sich diametral gegenüber liegenden Langlöchern 240, die die Form zweier Kreisbogensegmente haben und jeweils einen Winkel von ungefähr 130° einschließen, der Platte 228 geführt. Die Langlöcher 240 sind derart abgesetzt ausgeführt, dass zwei Muttern 242 für zwei Befestigungsschrauben 244 für die Flügel 232 in den Langlöchern 240 versenkt und verdrehgesichert geführt sind. Statt mit den Befestigungsschrauben 244 können die Flügel 232 auch mittels anderer stiftförmiger Elemente an der Platte 228 angeordnet sein.

Beispielsweise könnten zwei Stifte mit engem Spiel zur Führung und eine Schraube und eine Mutter zum Verspannen vorgesehen sein. Alternativ können statt der Langlöcher auch an einem Kreisbogen angeordnete ahgesetzte Durchgangsbohrungen vorgesehen sein.

Aufgrund des beschriebenen Aufbaus der Platte 228 können Winkel, um die das Fördermittel an den Umlenkeinheiten 216 oder 218 umgelenkt werden soll, stufenlos oder in Stufen eingestellt werden. Zur Montage werden die Flügel 232 über die Schrauben 242 und Muttern 244 in den Langlöchern 240 verschwenkt, bis ihre Position erreicht ist. Die Verbinder 234 sind dabei schon an den Flügeln 232 befestigt, zum Beispiel verschraubt. Dann werden die Flügel 232 mit den Verbindern 234 in die hinterschnittenen Längsnuten 235 bzw. Montagenuten der Streckenabschnitte 212, 214 geschoben und über Gewindestifte 245 (Figur 9), die gegen den Nutgrund der Längsnuten 235 drücken, verspannt. Anschließend können auch die Muttern 244 und Schrauben 242 vollständig angezogen werden. Zum Schluss oder alternativ zu Beginn wird ein Kurvenstück 236, das an den Winkel der Streckenabschnitte 212, 214 angepasst ist, über den Verbinder 238 an der Platte 228 bzw. den Umlenkeinheiten 216, 218 befestigt. Zusätzlich wird ein Verbinder 234 in außenliegenden, miteinander fluchtenden Längsnuten 235 der Streckenabschnitte 212, 214 und des Kurvenstücks 236 angebracht.

In der Figur 10 ist eine Umlenkeinheit 216, 218 gezeigt, die zwei Umlenkräder 230 aufweist, die das Fördermittel in einem Obertrum in der Transportebene und in einem Untertrum parallel zur Transportebene umlenken. Hierzu sind zwei Platten 228 miteinander verschraubt.

Für die Lagerung eines Umlenkrads 230 hat die Platte 228 eine zentrische Ausnehmung 246. An einem Absatz 248 der Ausnehmung 246 liegt der Außenring 250 eines Kugellagers 252 an, das über einen Sicherungsring 254 in seiner Position gehalten wird. Das Umlenkrad 230 ist mit einem abgesetzten bzw. vorstehenden Kragen 256 in den Innenring 258 des Kugellagers 252 gesteckt. Ein Drehteil 260, das mit einem Absatz 262 an der anderen Seite des Innenringes 258 des Kugellagers anliegt, ist mit dem Umlenkrad 230 verschraubt (Schraube 264). Das Drehteil 260 weist eine zentrische Bohrung 266 auf, über die der Antrieb 220 angekuppelt werden kann. In diesem Fall wäre nur eine der beiden dargestellten Platten 228 mit daran gelagertem Umlenkrad 230 vorgesehen.

Durch die Lagerung der Umlenkräder 230 in den beiden miteinander verschraubten Platten 228 können sich die Umlenkräder 230 gegensinnig drehen, was bei einer Umlenkeinheit 216, 218 nach der Figur 10 erforderlich ist.

Statt der dargestellten beiden Flügel 232 kann auch nur ein Flügel 232 schwenkbar angeordnet sein. Der andere Flügel 232 kann in diesem Fall einstückig mit der Platte 228 ausgebildet sein. Die in den Figuren 7 bis 10 dargestellte spiegelsymmetrische Ausbildung der Platte in Verbindung mit den beiden Flügeln 232 ist jedoch günstiger.

Die vorstehende Beschreibung des Ausführungsbeispiels gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Umlenkvorrichtung (1; 210) zum Umlenken eines sich längs einer Bewegungsbahn bewegenden Fördermittels in einer Umlenkebene, umfassend:
zwei Bauteile (5, 6; 232), welche um eine zur Umlenkebene im Wesentlichen orthogonale Schwenkachse relativ zueinander verschwenkbar und jeweils in einer vorbestimmten Winkelposition festlegbar sind,
wobei diese beiden Bauteile (5, 6; 232) dazu ausgelegt und bestimmt sind, an zwei Streckenabschnitten (8, 9; 212, 214) der Bewegungsbahn befestigt zu werden, welche die Umlenkebene aufspannen, und
wobei diese beiden Bauteile (5, 6; 232) ferner entweder aneinander oder an einer gemeinsamen Basisplatte (228) befestigt sind, **dadurch gekennzeichnet, dass** wenigstens ein Bauteil (5, 6; 232) oder/und die Basisplatte (228) entweder ein kreisbogensegmentförmiges Langloch (240) oder eine Mehrzahl von auf einem Kreisbogen angeordneten Bohrungen (20) aufweist, welches bzw. welche im Abstand von der Schwenkachse angeordnet ist bzw. sind.

2. Umlenkvorrichtung (1; 210) nach Anspruch 1,
**dadurch gekennzeichnet, dass** die beiden Bauteile (5, 6; 232) identisch ausgebildet sind.

3. Umlenkvorrichtung nach Anspruch 1 oder 2,
**dadurch gekennzeichnet, dass** ein Zentrierring vorgesehen ist, der im betriebsbereiten Zustand der Umlenkvorrichtung die Schwenkachse umgebend zwischen den beiden Bauteilen angeordnet ist und deren Relativpositionierung dient.

4. Umlenkvorrichtung (1) nach Anspruch 1 oder 2,
**dadurch gekennzeichnet, dass** eines der beiden Bauteile (5, 6) einen ringförmigen Flansch (15) aufweist, der zur Positionierung des jeweils anderen Bauteils (6, 5) dient.

5. Umlenkvorrichtung nach einem der Ansprüche 1 bis 4,
**dadurch gekennzeichnet, dass** die beiden Bauteile jeweils in einem der Schwenkachse zugeordneten Bereich wenigstens eine Bohrung aufweist.

6. Umlenkvorrichtung (1) nach einem der Ansprüche 1 bis 4;
**dadurch gekennzeichnet, dass** die beiden Bauteile jeweils eine Mehrzahl von Bohrungen (20) aufweisen, welche in gleichen Abständen voneinander angeordnet sind.

7. Umlenkvorrichtung nach einem der Ansprüche 1 bis 5,
**dadurch gekennzeichnet, dass** wenigstens eines der beiden Bauteile wenigstens ein Langloch aufweist, das wenigstens einer Bohrung oder/und einem Langloch des jeweils anderen Bauteils gegenüberliegt.

8. Umlenkvorrichtung nach Anspruch 7,
**dadurch gekennzeichnet, dass** die beiden Bauteile jeweils zwei einander bezüglich der Schwenkachse diametral gegenüberliegende Langlöcher aufweisen.

9. Umlenkvorrichtung (210) nach Anspruch 1,
**dadurch gekennzeichnet, dass** die Basisplatte (228) zwei, vorzugsweise einander bezüglich der Schwenkachse diametral gegenüberliegende, Langlöcher (240) aufweist.

10. Umlenkvorrichtung (1; 210) nach einem der Ansprüche 1 bis 9,
**dadurch gekennzeichnet, dass** die beiden Bauteile (5, 6; 232) mittels wenigstens eines Verbindungsstifts, vorzugsweise mittels wenigstens eines Schraubbolzens (10; 242), in der vorbestimmten Winkelposition festlegbar sind.

11. Umlenkvorrichtung (1) nach einem der Ansprüche 1 bis 10,
**dadurch gekennzeichnet, dass** an den beiden Bauteilen (5, 6) jeweils ein Verbindungselement (5a, 6a) einstückig angeformt ist, welches an einem der Streckenabschnitte (8, 9) befestigt ist.

12. Umlenkvorrichtung (1; 210) nach einem der Ansprüche 1 bis 10,
**dadurch gekennzeichnet, dass** wenigstens ein Verbindungselement (7; 234) vorgesehen ist, das einenends an einem der Bauteile und andernends an einem der Streckenabschnitte (8, 9; 212, 214) befestigbar ist.

13. Umlenkvorrichtung (210) nach Anspruch 11 oder 12,
**dadurch gekennzeichnet, dass** das Verbindungselement (234) in einer Aufnahmenut (235) des Streckenabschnitts (212, 214) anordenbar und in dieser an dem Streckenabschnitt (212, 214) befestigbar ist.

14. Umlenkvorrichtung (1; 210) nach einem der Ansprüche 1 bis 13,
**dadurch gekennzeichnet, dass** sie ein Umlenkrad (3; 230) für das Fördermittel umfasst, wobei das Umlenkrad (3; 230) mittels eines Lagers (2; 252) an einer die beiden Bauteile (5, 6; 232) umfassenden Aufnahme um die Schwenkachse drehbar gelagert ist.

15. Umlenkvorrichtung (210) nach Anspruch 14,
**dadurch gekennzeichnet, dass** sie eine Antriebseinheit (220) umfasst, die dazu dient, das Umlenkrad (230) in eine Drehbewegung um die Schwenkachse zu versetzen.

16. Umlenkvorrichtung nach Anspruch 15,
**dadurch gekennzeichnet, dass** zwischen der Antriebseinheit und dem Umlenkrad eine Kupplung angeordnet ist.

17. Umlenkvorrichtung (210) nach einem der Ansprüche 14 bis 16,
**dadurch gekennzeichnet, dass** das Umlenkrad (230) plattenförmig ausgebildet ist und über ein Verbindungselement (260) mit dem Drehlager (252) verbunden ist.

18. Umlenkvorrichtung nach einem der Ansprüche 14 bis 16,
**dadurch gekennzeichnet, dass** am Umlenkrad ein mit diesem einstückig ausgebildeter Flansch vorgesehen ist, über welchen das Umlenkrad mit dem Drehlager verbunden ist.

19. Umlenkvorrichtung (210) nach einem der Ansprüche 14 bis 18,
**dadurch gekennzeichnet, dass** sie zwei Umlenkräder (230) umfasst, die das Fördermittel in einem Obertrum in der Transportebene und in einem Untertrum parallel zur Transportebene umlenken.

## Claims

1. Deviating device (1; 210) for deviating a transport means moving along a movement path in a deviating plane, comprising:
two components (5, 6; 232) which are turnable relative to one another about a turning axis which is substantially orthogonal to the deviating plane, and which are fixable in a predetermined angular position,
wherein these two components (5, 6; 232) are designed and meant to be fixed to two track portions (8, 9; 212, 214) of the movement path which span the deviating plane, and
wherein these two components (5, 6; 232) are further fixed either to each other or to a common base plate (228),
**characterized in that** at least one component (5, 6; 232) and/or the base plate (228) has either an elongated hole (240) in the shape of a circular arc or a plurality of openings (20) located on a circular arc, which is/are located at a distance from the turning axis.

2. Deviating device (1; 210) according to claim 1, **characterized in that** both components (5, 6; 232) are formed identically.

3. Deviating device according to claim 1 or 2, **characterized in that** a centering ring is provided, which is located between the two components so that it surrounds the turning axis in an operable state of the deviating device for positioning the two components relative to each other.

4. Deviating device (1) according to claim 1 or 2, **characterized in that** one of the two components (5, 6) comprises a ring-shaped flange (15) for positioning the respective other component (6, 5).

5. Deviating device according to any one of claims 1 to 4, **characterized in that** both components have at least one opening respectively in an area associated with the turning axis.

6. Deviating device (1) according to any one of claims 1 to 4, **characterized in that** both components have a plurality of openings (20) respectively which are spaced at equal distances from each other

7. Deviating device according to any one of claims 1 to 5, **characterized in that** at least one of the two components has at least one elongated hole which is located opposite an opening and/or an elongated hole of the respective other component.

8. Deviating device according to claim 7, **characterized in that** both components have two elongated holes respectively which are located diametrically opposite each other relative to the turning axis.

9. Deviating device (210) according to claim 1, **characterized in that** the base plate (228) has two elongated holes (240) which are located diametrically opposite each other relative to the turning axis.

10. Deviating device (1; 210) according to any one of claims 1 to 9, **characterized in that** the components (5, 6; 232) are connectable in a predetermined angular position through at least one connecting pin, preferably through a screw pin (10; 242).

11. Deviating device (1) according to any one of claims 1 to 10, **characterized in that** a connecting element (5a, 6a), which is mounted on one of the track portions (8, 9), is formed of one piece integrally with each of the two components (5, 6).

12. Deviating device (1; 210) according to any one of claims 1 to 10, **characterized in that** at least one connecting element (7; 234) is provided, which is fixable to one of the components at one end and to one of the track portions (8, 9; 212, 214) at the other end.

13. Deviating device (210) according to any one of claim 11 or 12, **characterized in that** the connecting element is arrangable in a receiving groove (235) of the track portion (212, 214) and fixable in the receiving groove (235) to the track portion (212, 214).

14. Deviating device (1; 210) according to any one of claims 1 to 13, **characterized in that** it further comprises a deviating wheel (3; 230) for the transport means, wherein the deviating wheel (3; 230) is supported rotatably about the turning axis through a bearing (2; 252) on a receptacle which comprises the two components (5, 6; 232).

15. Deviating device (210) according to claim 14, **characterized in that** it further comprises a driving unit (220) for displacing the deviating wheel (230) in a rotary movement around the turning axis.

16. Deviating device according to claim 15, **characterized in that** a coupling is located between the driving unit and the deviating wheel.

17. Deviating device (210) according to any one of claims 14 to 16, **characterized in that** the deviating wheel (230) is plate-shaped and is connected with the rotary bearing (252) through a connecting element (260).

18. Deviating device according to any one of claims 14 to 16, **characterized in that** the deviating wheel is provided with a flange which is formed of one piece and which connects the deviating wheel to the rotary bearing.

19. Deviating device (210) according to any one of claims 14 to 18, **characterized in that** it comprises two deviating wheels (230) which deviate the transport means in an upper run in the transport plane and in a lower run parallel to the transport plane.

## Revendications

1. Dispositif de renvoi (1 ; 210) pour le renvoi d'un moyen de transport se déplaçant le long d'une voie de déplacement dans un plan de renvoi, comprenant :
deux composants (5, 6 ; 232) qui peuvent pivoter l'un par rapport à l'autre autour d'un axe de pivotement sensiblement orthogonal au plan de renvoi et qui peuvent être fixés chacun dans une position angulaire prédéterminée,
ces deux composants (5, 6 ; 232) étant conçus et définis pour être fixés à deux sections de parcours (8, 9 ; 212, 214) de la voie de déplacement qui définissent le plan de renvoi, et
ces deux composants (5, 6 ; 232) étant en outre fixés soit l'un à l'autre, soit à une plaque de base (228) commune, **caractérisé en ce qu'**au moins un composant (5, 6 ; 232) ou/et la plaque de base (228) présente soit un trou oblong (240) en forme de segment en arc de cercle, soit une pluralité de perçages (20) disposés sur un arc de cercle, lequel ou lesquels est ou sont disposés à distance de l'axe de pivotement.

2. Dispositif de renvoi (1 ; 210) selon la revendication 1,
**caractérisé en ce que** les deux composants (5, 6 ; 232) sont réalisés à l'identique.

3. Dispositif de renvoi selon la revendication 1 ou 2,
**caractérisé en ce qu'**il est prévu une bague de centrage qui, lorsque le dispositif de renvoi est prêt à être mis en service, est disposée entre les deux composants de façon à entourer l'axe de pivotement et qui sert à leur positionnement relatif.

4. Dispositif de renvoi (1) selon la revendication 1 ou 2,
**caractérisé en ce que** l'un des deux composants (5, 6) présente une bride (15) de forme annulaire qui sert au positionnement de l'autre composant (6, 5).

5. Dispositif de renvoi selon l'une des revendications 1 à 4,
**caractérisé en ce que** les deux composants présentent chacun au moins un perçage dans une zone associée à l'axe de pivotement.

6. Dispositif de renvoi (1) selon l'une des revendications 1 à 4,
**caractérisé en ce que** les deux composants présentent chacun une pluralité de perçages (20) qui sont disposés suivant un écartement constant.

7. Dispositif de renvoi selon l'une des revendications 1 à 5,
**caractérisé en ce qu'**au moins l'un des deux composants présente au moins un trou oblong qui fait face à au moins un perçage ou/et à un trou oblong de l'autre composant.

8. Dispositif de renvoi selon la revendication 7,
**caractérisé en ce que** les deux composants présentent chacun deux trous oblongs diamétralement opposés l'un à l'autre par rapport à l'axe de pivotement.

9. Dispositif de renvoi (210) selon la revendication 1,
**caractérisé en ce que** la plaque de base (228) présente deux trous oblongs (240), de préférence diamétralement opposés l'un à l'autre par rapport à l'axe de pivotement.

10. Dispositif de renvoi (1 ; 210) selon l'une des revendications 1 à 9,
**caractérisé en ce que** les deux composants (5, 6 ; 232) peuvent être fixés dans la position angulaire prédéterminée au moyen d'au moins une tige de liaison, de préférence au moyen d'au moins un boulon (10 ; 242).

11. Dispositif de renvoi (1) selon l'une des revendications 1 à 10,
**caractérisé en ce que** sur chacun des deux composants (5, 6) est formé d'une seule pièce un élément de liaison (5a, 6a) qui est fixé à l'une des sections de parcours (8, 9).

12. Dispositif de renvoi (1 ; 210) selon l'une des revendications 1 à 10,
**caractérisé en ce qu'**il est prévu au moins un élément de liaison (7 ; 234) qui peut être fixé à une extrémité à l'un des composants et à l'autre extrémité à l'une des sections de parcours (8, 9 ; 212, 214).

13. Dispositif de renvoi (210) selon la revendication 11 ou 12,
**caractérisé en ce que** l'élément de liaison (234) peut être placé dans une rainure de réception (235) de la section de parcours (212, 214) et peut être fixé dans celle-ci à la section de parcours (212, 214).

14. Dispositif de renvoi (1 ; 210) selon l'une des revendications 1 à 13,
**caractérisé en ce qu'**il comprend une roue de renvoi (3 ; 230) pour le moyen de transport, la roue de renvoi (3 ; 230) étant montée de manière à pouvoir tourner autour de l'axe de pivotement, au moyen d'un palier (2 ; 252), dans un logement entourant les deux composants (5, 6 ; 232).

15. Dispositif de renvoi (210) selon la revendication 14,
**caractérisé en ce qu'**il comprend une unité d'entraînement (220) qui sert à conférer à la roue de renvoi (230) un mouvement de rotation autour de l'axe de pivotement.

16. Dispositif de renvoi selon la revendication 15,
**caractérisé en ce qu'**un accouplement est disposé entre l'unité d'entraînement et la roue de renvoi.

17. Dispositif de renvoi (210) selon l'une des revendications 14 à 16,
**caractérisé en ce que** la roue de renvoi (230) est réalisée en forme de plaque et est reliée au palier de rotation (252) par un élément de liaison (260).

18. Dispositif de renvoi selon l'une des revendications 14 à 16,
**caractérisé en ce que** sur la roue de renvoi est prévue une bride réalisée d'un seul tenant avec celle-ci, par laquelle la roue de renvoi est reliée au palier de rotation.

19. Dispositif de renvoi (210) selon l'une des revendications 14 à 18,
**caractérisé en ce qu'**il comprend deux roues de renvoi (230) qui renvoient le moyen de transport dans un brin supérieur dans le plan de transport et dans un brin inférieur parallèlement au plan de transport.
